# EUROPEAN PATENT SPECIFICATION

(11) **EP 1 166 984 B1**
(45) Date of publication and mention of the grant of the patent: **09.08.2006**
(21) Application number: 01305160.2
(22) Date of filing: 13.06.2001
(51) Int. Cl.: B28D 1/08, B28D 1/30, B23D 57/00, B23Q 35/128

(54) **Method and apparatus for wire sawing operation, and contour tracing device for use therein**
Verfahren und Vorrichtung für Seilsägeoperationen und darin zu verwendende Vorrichtung zum Trassieren von Konturen
Procédé et appareil pour des opérations de scie à fil et dispositif de traçage de contours à utiliser dans ces opérations

(30) Priority: 23.06.2000 JP 2000004412
(43) Date of publication of application: 02.01.2002
(73) Proprietor: Ogyu, Shingo, Kawaguchi-shi, Saitama (JP)
(72) Inventor: Ogyu, Shingo, Kawaguchi-shi, Saitama (JP)
(74) Representative: Beresford, Keith Denis Lewis

(56) References cited:
- DE-A- 2 912 934
- DE-A- 3 120 633
- DE-A- 4 406 034
- US-A- 3 190 159
- US-A- 3 224 340

## Description

### •Field of the Art

The present invention relates to a method for wire sawing and cutting a stone or other hard materials into a predetermined shape, an apparatus for effecting the method, and a contour tracing device for use in such method and apparatus. More specifically, the present invention is directed to an improvement of such wire sawing method, an improvement of the wire saw apparatus, particularly a vertically-sawing-type wire saw apparatus, as well as to an improvement of the contour tracing device for use in the method and apparatus, which are suited for cutting a stone or other hard materials curvilinearly into a desired shape of resulting work.

### Background Art

Among wire saw apparatuses, a vertically sawing type of wire saw apparatus has been known, which is capable of curvilinearly cutting a stone or other hard material. This sort of wire saw apparatus is equipped with an X-Y table which is designed to move along x and y axes on the rectangular coordinates basis. In operation, for instance, a stone is placed on the X-Y table and translated in programmed directions along x and y axes toward a vertically running wire saw. Considering such sawing operation, it is necessary to avoid any possibility of the wire saw's cutting the X-Y table itself with the stone, and as such, there must be a certain region in the X-Y table where the wire saw is allowed to move and cut the stone only. This construction is, however, found disadvantageous in a very limited cutting range in the stone. For, the fact that the X-Y table has several points to retain the peripheral end portions of the stone actually prevents the wire saw from cutting those particular stone end portions and therefore confines an operative cutting range of wire saw to a central region of the stone.

Attempts have been made to eliminate such drawback, as for example disclosed from the Japanese Laid-Open Publication No. 9- 66516, wherein a stone to be cut is transferred along the direction of x axis, while at the same time, a vertically running wire saw is translated along a y-axis direction orthogonal with the x axis to cut the stone. Accordingly, in that prior art device, one rectilinear guide area is defined in a table on which the stone is placed, thereby allowing for translation of the wire saw across the stone along the y axis. A plurality of rollers having their rotation axes directed to the y axis are provided in the table, so that a stone on the table may be smoothly translated along the X-axis. With this arrangement, the end portions of stone can also be sawn and cut.

Indeed, this sort of conventional wire saw apparatus is advantageous in allowing the width of table to be made small along the y axis since the stone has only to be moved by the table along the x axis. But, the wire saw itself is inevitably to move a substantive amount along the y axis, thus requiring a space or room sufficient to accommodate even the whole working ranges of apparatus therein. Consequently, there remains a problem in attaining a reduced area for installation of the whole wire saw apparatus.

US-A-3 190 159 describes a bandsaw in which a workpiece and a pattern are placed on adjacent turntables synchronised for rotation in unison.

DE-A-3 120 633 describes a bandsaw apparatus in which a workpiece mounting table is rotatable paraxially with the cutting blade and movable towards and away from the cutting blade, the movements being controlled in response to the outline of a pattern traced as the pattern is rotated on a pattern table.

DE-A-2 912 934 08 describes a sawing apparatus in which a workpiece and a pattern are coaxially mounted, and an edge of the pattern is held in contact with a stop which is aligned with the saw blade, so that a rotation of the pattern and workpiece causes the saw to cut the workpiece to the shape of the pattern

In view of the foregoing shortcomings, it is a purpose of the present invention to provide an improved method for wire sawing an object, which effectively reduces an working area where the object is to be sawn. ,

It is another purpose of the invention to provide an improved wire saw apparatus which permits for reducing an installation area where the wire saw apparatus is installed.

It is still another purpose of the invention to provide an improved contour tracing device for use in the afore-said method and apparatus.

### Disclosure of the Invention

To achieve the abovementioned purposes, the present invention provides a wire saw apparatus as described in claim 1.

Many other features, advantages and additional objects of the present invention will become manifest to those versed in the art upon making reference to the detailed description which follows and the accompanying drawings.

### •Brief Description of the Drawings

Fig. 1 is a schematic front view of one exemplary mode of a wire saw apparatus in accordance with the present invention.
Fig. 2 is a schematic plan view of the wire saw apparatus.
Fig. 3 is an enlarged view of a contour tracing sensor unit.
Fig. 4 is a view for particularly showing a rotation drive mechanism and its operative connection with a rotary support table unit and a pattern mounting table.
Fig. 5 is a view for particularly showing a translation drive mechanism and its operative connection with the rotary support table unit and pattern mounting table.
Fig. 6(A) is a schematic diagram illustrating a radius-wise position sensor;
Figs. 6(B) to 6(G) are diagrams for explanatorily showing a sequence of detecting actions of the radius-wise position sensor.
Fig. 7 is a block diagram showing electrical arrangements in the wire saw apparatus.
Figs. 8(A) and 8(B) are illustrative of cutting operations by a conventional wire saw apparatus; and
Figs. 8(C) and (D) are illustrative of cutting operations by the wire saw apparatus of the present invention.
Figs. 9(A) to 9(G) show an alternative mode of radius-wise position sensor and a sequence of detecting actions of the same.

### •Best Mode of Practicing the Invention

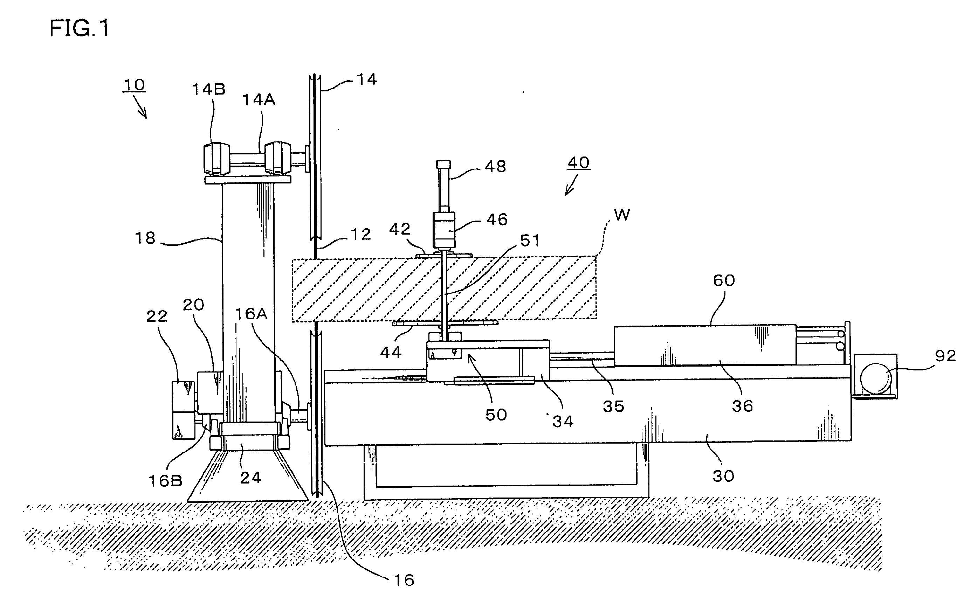

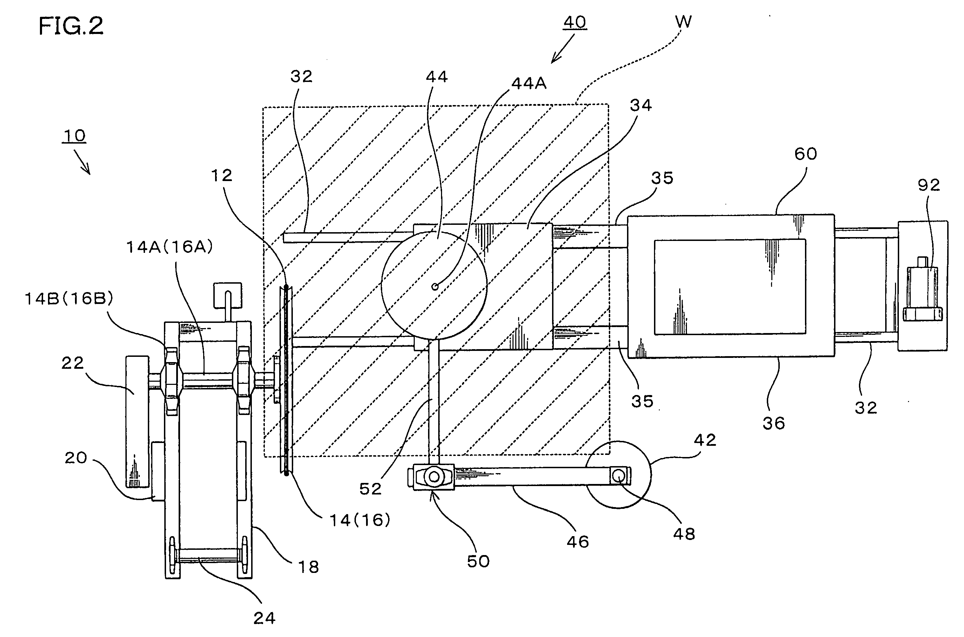

At first, referring to Figs. 1 and 2, one preferred mode of wire saw apparatus is illustrated according to the present invention. A whole construction of the wire saw apparatus will now be described.

Fig. 1 shows a front elevation of the wire saw apparatus. Fig. 2 gives a plan view of the same apparatus. As looked from those figures, a vertically sawing type of wire saw unit 10 is disposed on the left-hand side of the present wire saw apparatus. The wire saw unit 10 is comprised of a pair of spaced-apart upper and lower sheaves 14, 16 and a diamond wire saw 12 engaged about and between the upper and lower sheaves 14, 16, such that the wire 12 establishes an endless wire saw to be vertically run and circulated by the two sheaves with respect to the wire saw apparatus. A rotary shaft 14A of the upper sheave 14 is supported by a bearing 14B. Bearing 14B is fixed on the top of a support frame 18.

On the other hand, a rotary shaft 16A of the lower sheave 16 is supported by a bearing 16B fixed on the base portion of the support frame 18. A sheave drive source or a motor 20 is mounted on that base portion of support frame 18. A drive shaft of the motor 20 is connected via a belt transmission unit 22 with the lower sheave shaft 16A, so that a rotation of the motor 20 is transmitted to the shaft 16A. An adjustment handle unit 24 is provided for manually adjusting a position of the lower sheave 16 in a vertical direction to and from the upper sheave 14, so that a worker can use the handle unit 24 to give a desired tension to the endless diamond wire saw 12.

The operation of the above-constructed wire saw unit 10 is as follows. With the endless diamond wire saw 12 engaged on and about both upper and lower sheaves 14, 16, the adjustment handle unit 24 is manipulated to adjust the position of the lower sheave 16 with respect to the upper sheave 14 so as to give a desired tension to the wire saw 12. Thereafter, the motor 20 is operated to rotate the lower sheave 16 and thus circulate the endless wire saw 12 between the lower and upper sheaves 16, 14. The wire saw 12 so circulated naturally has two opposite sawing runs, i.e. an upward sawing run and a downward sawing run between the two sheaves 16, 14. Either of such upward and downward sawing runs may be used, considering a convenient sawing angle with a stone or other hard material to be cut. Though not shown, water is applied to a portion of the stone being sawn and cut by the wire saw 12.

Adjacent to the wire saw unit 10, a stationary table 30 is provided, extending its longitudinal body along the axial direction of both upper and lower sheaves' shafts 14A, 16B. The stationary table 30 has a pair of rails 32 fixed on the flat surface thereof, the rails 32 extending along the longitudinal direction of the table 30. Upon those rails 32, the first and second carriages 34, 36 are mounted, which are joined together via two connecting arms 35 and movable in union on and along the rails 32.

On the first carriage 34, there is provided a rotary support table unit, as generally designated by 40, which is designed to retain a stone (or other hard material to be cut) therein and angularly displace it with respect to the wire saw unit 10 for cutting operation. The rotary support table unit 40 is composed of an upper pressure table 42 and a lower table 44. The upper pressure table 42 is rotatably carried by a horizontal arm 46 and so connected at the center thereof with a pressing mechanism 48 that operation of the pressing mechanism 48 will result in downward movement of the upper table 42 to press and retain the stone (or other hard material) against the lower table 44. The horizontal arm 46 is rotatably supported by a generally L-shaped arm 50. As seen from Figs. 1 and 2, the L-shaped arm 50 includes a vertically extending portion 51 and a horizontally extending portion 52 connected to the first carriage 34. As can be seen from Fig. 1, when both upper and lower tables 42, 44 are positioned in a coaxially faced relation with each other, those L-shaped and horizontal arms 50, 46 are so disposed to assume a generally "U" shape on the whole with respect to the first carriage 34, while the horizontal arm 46 is free to rotate about the axis of vertically extending portion 51 of arm 50 on the horizontal plane. The lower table 44 is, at its rotation center (at 44A), rotatably mounted on the first carriage 34. Detailed mechanical relation between those lower table 44 and carriage 34 will be explained later.

Now, an object to be cut is designated by W, be it a stone or other hard material. This object W should be secured by the rotary support table unit 40 in the following steps. At first, the horizontal arm 46 is rotated about the vertical portion 51 of L-shaped arm 50 toward a withdrawn position as shown in Fig. 2, where the upper table 42 is withdrawn to a point distant from the lower table 44. Then, the object W is placed on the lower table 44, followed by rotating back the horizontal arm 46 to an operative position, as shown in Fig. 1, where the upper table 42 is located above the base table 44 so that the two tables 42, 44 faces coaxially to each other. The pressing mechanism 48 is then actuated to move the pressure table 42 downwardly into a pressing abutment against the object W placed on the lower table 44, thereby firmly securing the object in the rotary support table unit 40. Of course, the object W secured by the table unit 40 may be translated forwardly and backwardly along the rails 32 by causing the corresponding translations of the first carriage 34 on which that particular table unit 40 is mounted.

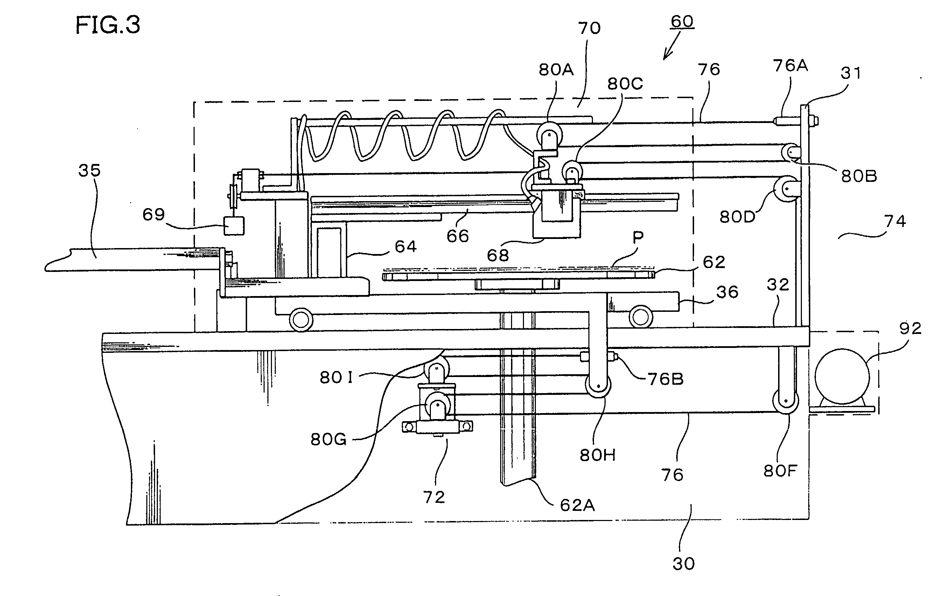

On the other hand, equipped on the second carriage 36 is an optical contour tracing unit 60 for optically tracing and detecting the contour of a pattern paper which forms a basic outer configuration along which the object W is to be sawn and cut. Referring particularly to Fig. 3, a schematically enlarged view of the contour tracing unit 60 is illustrated, from which it is seen that a certain paper pattern P to be detected is mounted or placed on a pattern mounting table 62. Pattern mounting table 62 is disposed above the second carriage 36 and rotatably connected therewith. A vertical support arm 64 is fixed on one end part of the carriage 36, standing perpendicularly therewith. From such vertical support arm 64, a horizontal guide member 66 extends horizontally along and in parallel with the rails 32. This contour tracing unit 60 includes a contour tracing sensor 68 movable to trace and detect the contour of a predetermined paper pattern P placed on the table 62. The contour tracing sensor 68, which comprises suitable photosensors, is so attached to the guide member 66 as to be slidingly movable therealong. As can be seen in Fig. 3, plural pulleys are arranged in the present tracing unit 60 as a means for causing a relative movement between the sensor 68 and two carriages 34, 36 at a proper movement amount ratio. The pulleys are formed by a first pulley group 70 disposed on the contour tracing sensor 68; a second pulley group 72 disposed under the stationary table 30 at a point adjacent to the second carriage 36; and a third pulley group 74 disposed on a vertically extending support member 31 erected on the table 30 as well as on the stationary table 30. The first pulley group 70 has three pulleys 80A, 80B and 80C operatively associated with the sensor 68. The second pulley group 74 has two pulleys 80D and 80F. The third pulley group 72 has three pulleys 80G, 80H and 80I operatively associated with the second carriage 36 such that the pulley 80H is attached to downwardly projected portion of the carriage 36 as shown.

One long string 76 passes all through the three pulley groups 70, 72 and 74, establishing an interlocking relation between the contour tracing sensor 68 and second carriage 36 via the pulley groups. Namely, the string 76 extends from one end 76A thereof fixed to the support member 31, with the remainder part of the string 76 running through all the pulleys 80A to 80I in sequence, down to another end 76B thereof fixed to the second carriage 36. It is noted that those plural pulleys 80A to 80I are so designed and arranged to set a ratio of travel amount of the contour tracing sensor 68 relative to a travel amount of the second carriage 36. In the present mode, the pulleys are arranged such that the contour tracing sensor 68 will travel 1/4 amount (distance) along the guide member 66 in relation to an amount at which the second carriage 36 travels along the rails 32. Of course, this is not limitative, but the number of the pulleys may be reduced or increased appropriately in order that the travel amount of sensor 68 may be 1/1, 1/2, 1/6 or at other proper ratio in relation to that of the carriage 36, depending upon a relation in size between the object W and the pattern paper P. A balance 69 is provided on the forward end of carriage 36 and connected via a wire with the contour tracing sensor 68 so as to counterbalance a pulling force imparted through the string 76 from the carriage 36, thereby keeping the sensor 68 positioned at a given point against unnecessary movement. As is known, the contour tracing sensor 68 may be formed by a suitable photosensor system incorporating three photosensors for instance, which works to detect an amount of light shaded by the pattern paper P and cause controlled slight movements of the sensor 68 to precisely trace and detect the contour of the paper P. The pattern paper P is not limited to a paper material, but any other material may be used to form a predetermined pattern. The basic technical concept for optically tracing and detecting a pattern and its interlocking relation with the pulleys is known, as disclosed for example from the Japanese Patent No. 2587795, but the specific construction of contour tracing unit 60 per se is of an inventive significance in the present invention as it will become apparent hereinafter.

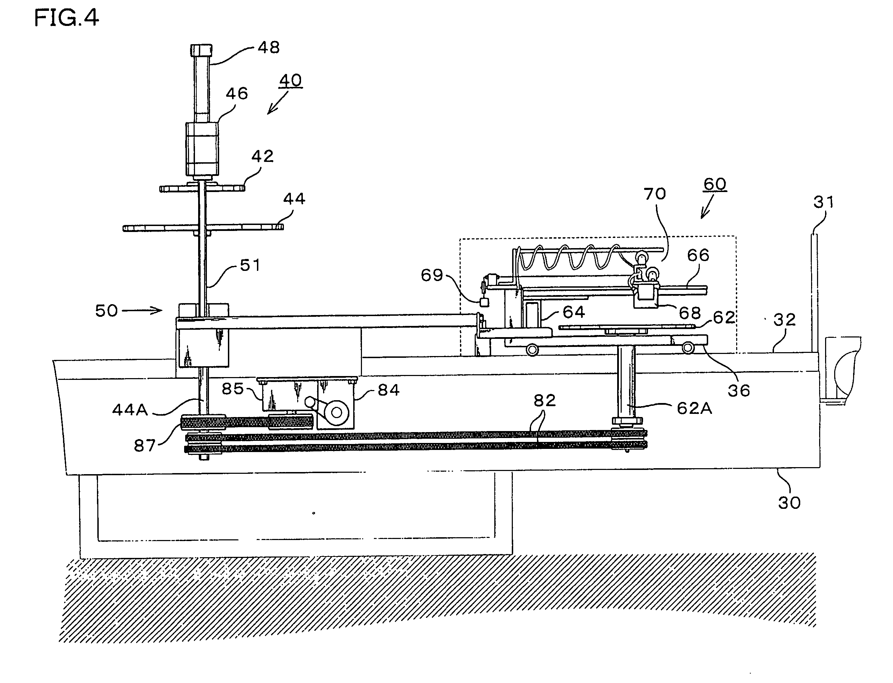

The pattern mounting table 62 has a rotary shaft 62A extending downwardly therefrom. As shown in Fig. 4, such rotary shaft 62A is connected via one timing belt mechanism 82 with the rotary shaft 44A of lower table 44. Another timing belt mechanism 87 is provided to connect the rotary shaft 44A and a reduction gear 85 in an interlocking way. A rotation drive motor 84 is connected with the reduction gear 85 as seen from Fig. 4 so that a rotational drive from the motor 84 will be transmitted to the rotary shaft 44A. Hence, the rotation drive motor 84 is used for rotating both lower table 44 and pattern mounting table 62 via the two timing belt mechanisms 82, 87. Namely, a rotational drive generated by the motor 84 is reduced properly by the reduction gear 85 and introduced to the timing belt mechanism 87 which in turn transmits a corresponding rotation to both rotary shaft 44A and timing belt mechanism 82. Such transmissions therefore cause synchronized rotation of both lower table 44 and pattern mounting table 62 in the same direction and at a same number of rotation (i.e. at a same rotation speed) .

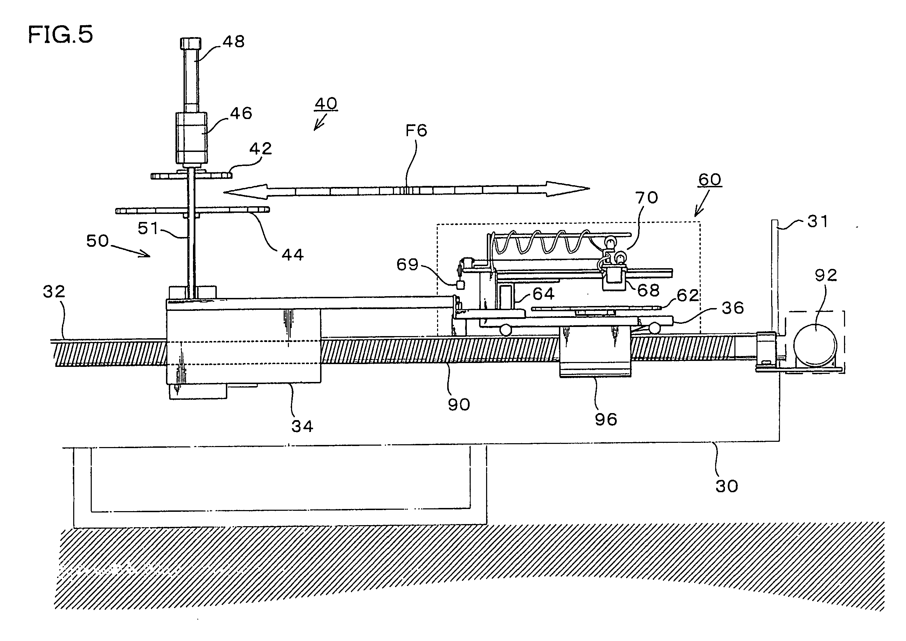

As shown in Fig. 5, a feed screw 90 extends in the longitudinal direction of stationary table 30 and along the rails 32. A translation drive motor 92 is provided at an end area of the stationary table 30 opposite to the wire saw unit 10 and connected with one end of the feed screw 90. Another end of the feed screw 90 is received in a bearing. The bearing is firmly disposed on another end area of the stationary table 30 where the wire saw unit 10 lies. The second carriage 36 has a slider 96 threadedly engaged about the feed screw 90. Thus, upon the translation drive motor 92 being operated, the feed screw 90 is rotated to cause translation of the slider 96 along the axial direction of screw 90. In other words, both first and second carriages 34, 36 may be translated by the operation of translation drive motor 92 forwardly and backwardly in the arrow directions F6 along the rails 32.

In operating the wire saw apparatus, a worker has to consider a rotation speed of the object W (or a rotation number of the rotary support table unit 40, particularly a rotation number of the lower table 44) with respect to a constant vertical run of the diamond wire saw 12 in an attempt to saw the object W stably and smoothly. This is due to the fact that the wire saw 12, when located at an outward point within the object W near to the outward peripheral areas of the same object, is to cut the object in an outward circumferential direction relative to and distant from the rotation center (at 44A) (namely, the wire saw 12 is in a tangential relation with the circumference of a comparatively large circle along which an outward region of the object W to be sawn is rotated), whereas on the other hand, the wire saw 12, when located at an inward point within the object W, is to cut the object in an inward circumferential direction relative to and near to that rotation center (at 44A) (namely, the wire saw 12 is in a tangential relation with the circumference of a comparatively small circle along which an inward region of object W to be sawn is rotated). Because of such inevitable difference in cutting position of wire saw 12, given a constant rotation speed of the object W (or a constant rotation number of the lower table 44), a difference will naturally arise in circumferential speed between the outward and inward regions of object W being rotated by the rotary support table unit 40, which will in most cases prevent the wire saw 12 from its smooth sawing and cutting the object W. While it is not absolutely necessary to adjust such two different relative circumferential speeds into exactly the same rate, it is desirable to minimize the circumferential speed difference to a degree enough for the wire saw 12 to keep on a stable, smooth sawing and cutting of the object W. Accordingly, we, the inventors, contemplate a means for detecting a position of diamond wire saw 12 in terms of the afore-said outward and inward circumferential directions (in other words, a means for detecting a position or distance of the wire saw 12 from the rotation center (44A) of the lower table 44 or in the direction of the radius (radius-wise direction) of a circle along which a part of the object W to be cut is rotated by the rotary support table unit 40) and also contemplate a control means for controlling a rotation number or rotation speed of the object W in response to a data obtained from such detection of wire saw position. These means will be described and embodied below by way of one preferred mode. Hereinafter, the term "radius-wise" or "radius-wise direction" shall refer to a direction of the radius of a circle along with a part of the object W to be cut is rotated by the rotary support table unit 40 and thus refer to a radial direction relative to the rotation center (at 44A) of the same table unit 40.

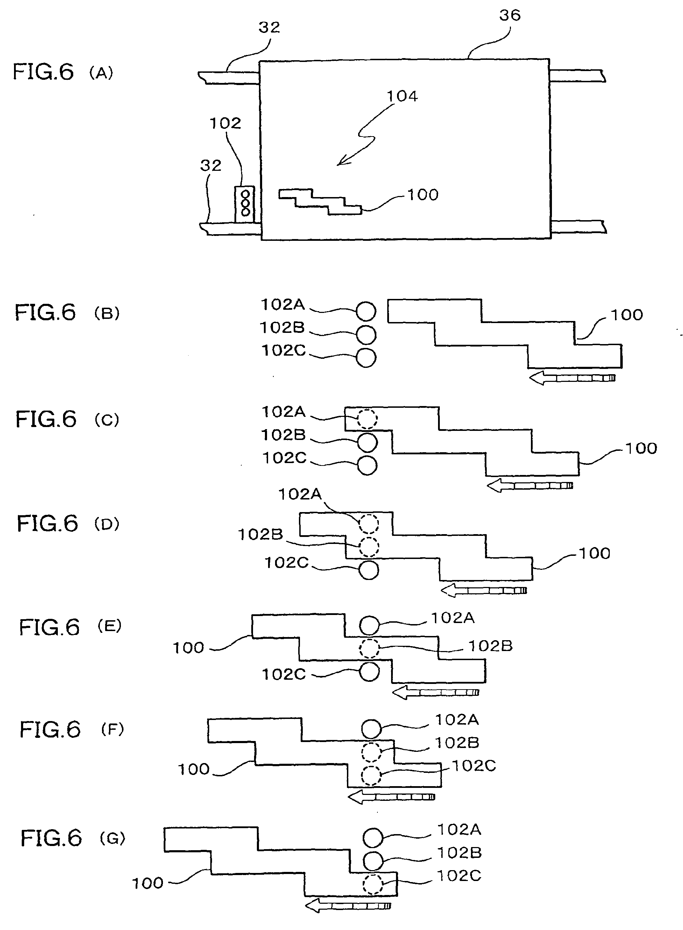

The operative sawing or cutting position of diamond wire saw 12 in the above-defined radius-wise direction corresponds to the position of first carriage 34 or second carriage 36 on and along the rails 32 because the rectilinear line of the rails 32 extends along the diameter of a circle having a center at the rotation center (44A) of rotary support table unit 40 and also because both two carriages 34, 36 are joined together. Based on this fact, in accordance with the present invention, there is provided a radius-wise position sensor for detecting a current cutting position of diamond wire saw 12 in the radial direction relative to the rotation center of rotary support table unit 40, which will now be described. Fig. 6 generally indicates the radius-wise position sensor by the designation 104, which comprises a stepwise formed encode plate 100 and an array of plural photodetector elements 102, the schematic constructions of which are shown in Fig. 6 (A). As seen from the Fig. 6 (A), the encode plate 100 is provided on the second carriage 36 (or may be provided on the first carriage 34) and has a three-stepped outer configuration wherein three stepped sections are defined in a stepwise offset fashion along the longitudinal direction of the rails 32, thus extending along the radius-wise direction. On the other hand, one array of plural photodetector elements, generally designated by 102, is disposed on the stationary table 30, extending in a direction orthogonal with the radius-wise direction in which the carriages 34, 36 are to move along the rails 32, and further located at a path where the encode plate 100 travels with the movement of carriages 34, 36. In the shown embodiment, such photodetector element array 102 comprises three photosensors: a first photosensor 102A; a second photosensor 102B; and a third photosensor 102C.

According to the illustrations of Fig. 6(A) to 6(G) for instance, an interactive relation between the photodetector elements 102 and encode plate 100 will now be explained. At first, as in Fig. 6 (B), the encode plate 100 is positioned a certain distance from the three photosensors 102A, 102B, 102C, thus having no interactive relation therebetween. Under this normal state, when both two carriages 34, 36 are moved or translated by operation of the translation drive motor 92 in the direction of arrow, the first stepped section of encode plate 100 is brought to a point shading the first photosensor 102A alone as shown in Fig. 6 (C). Further translation of the carriages 34, 36 in the same arrow direction brings the intermediate stepped section of encode plate 100 to a point shading both first and second photosensors 102A, 102B as shown in Fig. 6 (D). Referring then to Figs 6(E) to 6(G) in sequence, continued translation of the carriages 34, 36 in the arrow directions causes the remainder stepped sections of encode plate 100 to shade the second photosensors 102B alone as in Fig. 6 (E), thereafter, shade both second and third photosensors 102B, 102C as in Fig. 6 (F), and finally shade the third photosensor 102C alone as in Fig. 6 (G).

By virtue of the above-described arrangements, six different signals can each be outputted from the photosensors 102A, 102B and 102C in response to the respective six different modes of photosensitive shading (as seen from Fig. 6 (B) to Fig. 6 (G)) caused by the encode plate 100, whereby it is possible to detect six different positions of the carriages 34, 36. Practically, the translation of carriages 34, 36 in the arrow directions along the rails 32 changes the cutting position of diamond wire saw 12 to the object W in the radius-wise direction discussed above. Therefore, the encode plate 100 moves in the same radius-wise direction, effecting the six different modes of shading over the photosensors 102A, 102B and 102C, so that a current operative position of wire saw 12 in the object W is detected in the radius-wise direction at six different levels from those photosensors.

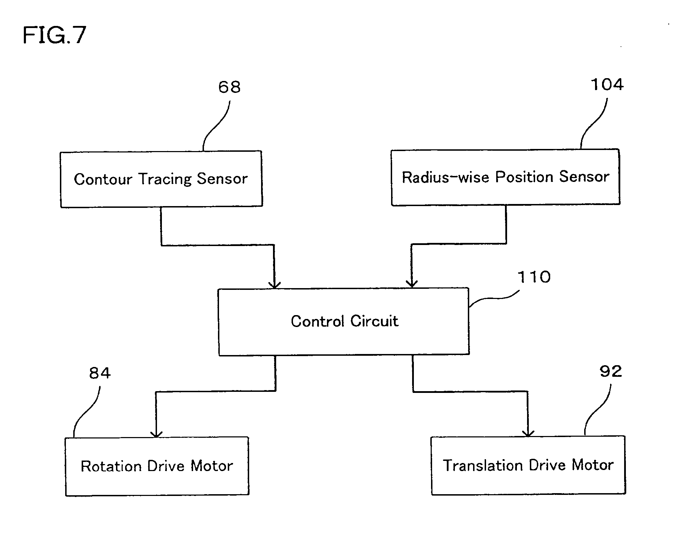

Fig. 7 schematically shows electrical connections among the above-described principal elements in the wire saw apparatus. In the Fig. 7, designation 110 stands for a control circuit. As shown, electrically connected with an input side of the control circuit 110 are the aforementioned contour tracing sensor 68 and radius-wise position sensor 104. Further, the control circuit 110 is, at its output side, electrically connected with the rotation drive motor 84 and translation drive motor 92 mentioned earlier. Thus, upon receiving a data about the contour of pattern paper P from the sensor 68, the control circuit 110 will send instruction signals to the two motors 84 and 92 so as to effect a controlled translation of carriages 34, 36 and a controlled rotation of the rotary support table unit 40, thereby causing an object W on the table unit 40 to be sawn and cut by the wire saw 12 along a predetermined contour corresponding to that of the pattern paper P. During this operation, the control circuit 110 also receives signals from the radius-wise position sensor 104 and detects a radius-wise position of the wire saw 12 in the object W to properly increase and decrease the number of rotation (or rotation speed) of the rotation drive motor 84 on the basis of a data about such radius-wise position of wire saw 12. In brief, the control circuit 110 basically controls the rotation drive motor 84 such that the rotation number of the motor 84 becomes decreased progressively as the wire saw 12 cutting the object W proceeds away from the center of rotation of rotary support table unit 40. In other words, in view of the previously noted circumferential speed difference between the outward and inward regions of object W being rotated, the control circuit 110 will work on to minimize such circumferential speed difference by adjustingly increasing and decreasing the rotation number or speed of the motor 84 in response to the data concerning the wire saw radius-wise position, thereby maintaining a smooth, stable sawing of the wire saw 12 against the object W. Though not specifically shown, the control circuit 110 may be designed and formed properly in any known electrical and electronic manner insofar as it can execute the controlling actions described herein.

Description will now be made about an operation of the wire saw apparatus. At first, an object W to be cut is securely retained between the upper and lower tables 42, 44 of rotary support table unit 40, while a predetermined pattern paper P is set on the pattern mounting table 62. By switching on the wire saw apparatus, the wire saw unit 10 is activated to circulate the endless diamond wire saw 12 vertically with respect to the object W, and at the same time, both rotation drive motor 84 and translation drive motor 92 are operated under the electrical control of the control circuit 110. The contour tracing sensor 68 is also moved to trace and detect the contour of pattern paper P, sending detection signals to the control circuit 110. Then, upon receiving the detection signals, the control circuit 110 processes the signals and sends instruction signals to both rotation and translation drive motors 84, 92 which are in turn controlled as to their respective rotation numbers or speed to cause proper rotation of the rotary support table unit 40 and proper translation of the carriages 34, 36, so that the object W is displaced in proper angular and rectilinear directions and cut by the wire saw 12 into a shape with a predetermined contour corresponding to that of pattern paper P. Namely, if a signal is outputted from the contour tracing sensor 68, calling for clockwise rotation of the object W by a certain rotation angle for instance, the control circuit 110 receives such signal and sends a corresponding instruction signal to the rotation drive motor 84. Then, the motor 84 is controlled as to its rotation speed and rotation angle, thereby transmitting a certain amount of clockwise rotation speed and angle via the timing belt mechanisms 82, 87 to both upper and lower tables 42, 44, while transmitting the same amount of clockwise rotation speed and angle to the pattern mounting table 62 via the timing belt mechanism 82, with the result that the object W retained by the two tables 42, 44 is rotated in a given clockwise direction and at a given angle of rotation, while at the same time, the pattern paper P on the table 62 is rotated in the same direction and at the same angle of rotation. Of course, during this operation, from the radius-wise position sensor 104, a signal is also outputted to the control circuit 110 concerning a data about the current position of wire saw 12 cutting the object W, and then the control circuit 110 sends an instruction signal to the rotation drive motor 84 so as to control the rotation number or speed of the motor 84. Hence, if the radius-wise position sensor 104 detects that the cutting position of wire saw 12 is now in the previously noted inward circumferential direction (or in an inward region of the object W), then both rotary support table unit 40 (i.e. the two tables 42, 44) and pattern mounting table 62 are rotated at a comparatively high speed by the motor 84. By contrast, if the cutting position of wire saw 12 is detected by the sensor 104 to be in the outward circumferential direction (or in an outward region of the object W), then both rotary support table unit 40 (i.e. the two tables 42, 44) and pattern mounting table 62 are rotated at a comparatively low speed by the motor 84. Under such control, the rotation of object W itself is varied and adjusted at an optimum rotation number or speed so as to minimize the circumferential speed difference, thereby allowing the object W to be smoothly and stably sawn and cut by the wire saw 12.

Further, if a signal is outputted from the contour tracing sensor 68, calling for leftward translation of the carriages 34, 36 (as viewed from Fig. 1) toward the wire saw 12, the control circuit 110, upon receiving the signal, sends a corresponding instruction signal to the translation drive motor 92 which then rotates the feed screw 90 to cause the same leftward translation of the second carriage 36 along the screw 90. In this respect, as stated above, the contour tracing sensor 68 travels 1/4 amount in relation to a travel amount of the second carriage 36 under the transmission effect of pulley groups (70, 72, 74). Taking such ratio into account, the control circuit 110 instructs the motor 92 to rotate the feed screw 90, causing the second carriage 36 to travel leftwards by an amount four times the amount of leftward travel of the sensor 68 along the guide member 66. Thus, both pattern mounting table 62 and rotary support table unit 40 are translated at such four-fold distance in the same leftward direction (to the wire saw unit 10) since both two carriages 34, 36 are movable in union along the rails 32. Accordingly, this relative translation control results in the tracing sensor 68 being traveled 1/4 amount in relation to a travel amount of the rotary support table unit 40. Repetition of such controlled relative translations and the afore-stated rotation controls are performed by the present wire saw apparatus to properly translate and rotate the object W against the diamond wire saw 12, so that the object W is precisely cut by the wire saw 12 along a contour corresponding to that of pattern paper P.

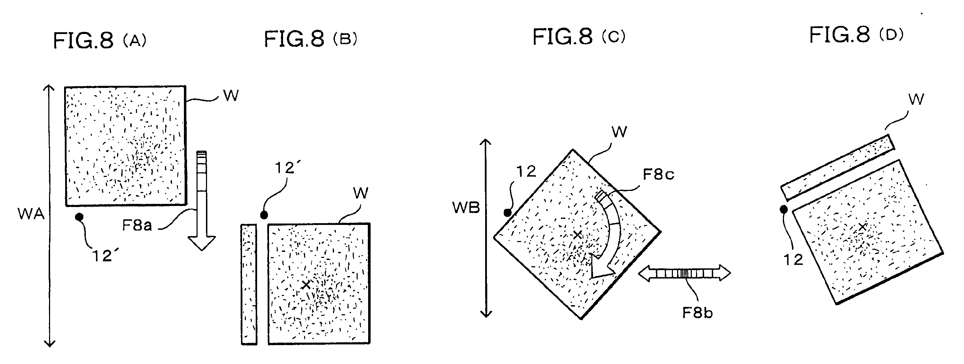

As appreciated from the foregoing, in the present embodiment, the rotary support table unit 40 is subjected to translation and rotation on the basis of polar coordinates system, which effectively reduces an operative movement range of the object W or the table unit 40 itself in comparison with the conventional rectangular-coordinate control given in the prior art description above. This is obviously understood from a comparative view between a set of Figs. 8 (A) and 8 (B) and another set of Figs. 8 (C) and (D). All those figures show the case where an object W is wire sawn and cut rectilinearly into two separate pieces. Figs. 8 (A) and 8 (B) illustrates the state where the object W is cut by a wire saw 12' according to a prior-art wire saw apparatus. That is, as viewed from Fig. 8 (A) to Fig. 8 (B), the object W is moved on a rectilinear line only in one arrow direction F8a, and then its lateral side portion is cut away therefrom by the wire saw 12'. Consequently, it is seen that the object W moves a distance WA about twice as long as the object W, and therefore this conventional apparatus requires a working area substantially twice the width of object W.

On the other hand, according to the present invention, as viewed from Fig. 8 (C) to 8 (D), an object W is translated in normal and reverse directions by the translation drive motor 92 within a limited range as indicated by the arrow F8b, while being simultaneously rotated in the arrow direction F8c by the rotation drive motor 84, so that the lateral side portion of object W is cut away rectilinearly therefrom by the wire saw 12 under the control of the control circuit 110 responsive to a data from both two sensors 68 and 104 detecting the rectilinear contour of a pattern paper P. Consequently, it is appreciated that the object W is rotated only within a fixed range WB which is generally equal to a diametric size of the object W itself and further the translation of the object W is limited to a small radius-wise range represented by the arrow F8b. In the present invention, therefore, a polar coordinates system is introduced in the concept of control for minimized movement ranges of the rotary support table unit 40 or object W, whereby there is effectively reduced an installation area in which the wire saw apparatus is installed. Of course, not to mention the foregoing rectilinear cutting operation, the wire saw apparatus can also operate to cut the object W curvilinearly along any intricate curved portions of pattern paper P into a desired shape of resulting work.

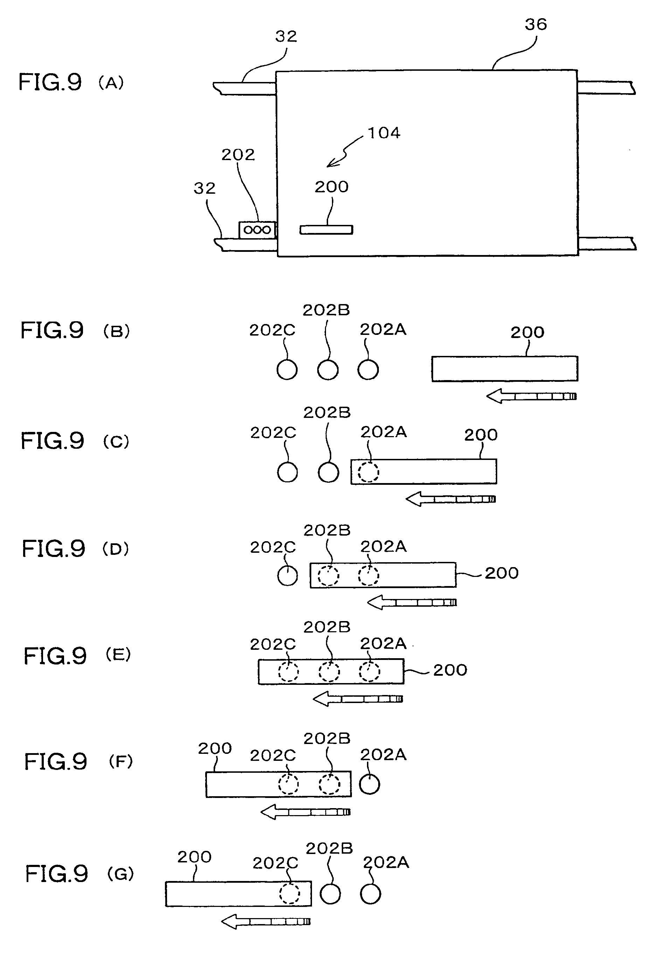

It should be understood that various modifications, replacements and additions will become possible for those skilled in the art after receiving the teachings of the present disclosure without departing from the scopes of the appended claims. For example,
(1) the wire saw unit is not limited to the illustrated one 40 of the type having two sheaves, but may be any other sorts of vertically-sawing-type wire saw units that are known and widely available.
(2) The mechanisms for translating and rotating the rotary support table unit 40 and pattern mounting table 62 may be formed by any other known kinds of gear devices, chain transmission mechanism and belt mechanisms, and if required, a reduction gear may be incorporated therein. Also, the radius-wise position sensor 68 and tracing sensor unit 60 may be composed of any other modes of sensor elements and detecting devices.
(3) Regarding the object W, a stone is best preferable, but not limitative. Other sorts of materials, including concrete materials or artificial stone materials, may be used in the present invention.
(4) The radius-wise position sensor 104 described above is just one exemplary mode and not limited to the particular mode of Figs. 6(A) to 6(G). But, any other sorts of known sensors may be used and combined together properly to detect the radius-wise position of the wire saw 12. In the present invention, another preferred alternative mode of radius-wise position sensor 104 may be provided as shown in Figs. 9(A) to 9(G) wherein the sensor 104 comprises one piece of rectangular encode plate 200 and one array of photodetector elements 202, both of which are so disposed on the same line as to extend along the radius-wise direction that has been discussed above. Specifically, with reference to Fig. 9(A), disposed on the second carriage 36 (or the first carriage 34) is the rectangular encode plate 200 which extends in the radius-wise direction along the rail 32, whereas the array of photodetector elements 202 is disposed at the stationary table 30, extending alongside the rail 32 and thus in the same radius-wise direction. Of course, the photodetector element array 202 is located at a path where the encode plate 200 travels with the movement of the carriages 34, 36.

According to the illustrations of Fig. 9 (A) to 9(G) for instance, an interactive relation between the photodetector elements 202 and encode plate 200 will now be explained. At first, as in Fig. 9 (B), the encode plate 200 is positioned a certain distance from the three photosensors 202A, 202B, 202C, thus having no interactive relation therebetween. Under this normal state, when both two carriages 34, 36 are moved or translated by operation of the translation drive motor 92 in the direction of arrow, the first stepped section of encode plate 200 is brought to a point shading the first photosensor 202A alone as shown in Fig. 9 (C). Further translation of the carriages 34, 36 in the same arrow direction brings the intermediate stepped section of encode plate 200 to a point shading both first and second photosensors 202A, 202B as shown in Fig. 9 (D). Referring then to Figs 9(E) to 9(G) in sequence, continued translation of the carriages 34, 36 in the arrow directions causes the remainder stepped sections of encode plate 200 to shade the three photosensors 202A, 202B, 202C alone as in Fig. 9 (E), thereafter, shade both second and third photosensors 202B, 202C as in Fig. 9(F), and finally shade the third photosensor 202C alone as in Fig. 9 (G).

By virtue of the above-described arrangements, six different signals can each be outputted from the photosensors 202A, 202B and 202C in response to the respective six different modes of photosensitive shading (as seen from Fig. 9 (B) to Fig. 9 (G)) caused by the encode plate 200, whereby it is possible to detect six different positions of the carriages 34, 36. Practically, the translation of carriages 34, 36 in the arrow directions along the rails 32 changes the cutting position of diamond wire saw 12 to the object W in the radius-wise direction discussed above. Accordingly, such combination of rectangular encode plate 200 and photodetector array 202 also effectively realizes the radius-wise position sensor that fulfills the purpose of the present invention.

As described thus far, in accordance with the present invention, two different modes of movements, i.e. translation and rotation, are utilized in combination and controlled on the polar coordinates basis for minimized displacement of an object W in a vertically sawing type of wire saw apparatus that incorporates a tracing sensor unit. Therefore, it is possible to make small the movement ranges of the associated movable elements, thereby attaining a reduced installation area where the wire saw apparatus is to be installed.

## Claims

1. A wire saw apparatus which includes a table (40) for supporting an object (W) thereon, a wire saw (12), and a contour tracing device (60) comprising:
a pattern mounting table (62) on which a pattern (P) is mountable; and
a contour tracing sensor means (68) for tracing and detecting a contour of said pattern (P);
wherein said contour tracing device (60) is operable to trace and detect the contour of said pattern (P) via said contour tracing sensor means (68) and wherein, in response to data sent from said contour tracing sensor means (68), said wire saw (12) is operable to saw said object (W) on said table (40) along a predetermined contour corresponding to said contour of said pattern (P), **characterized in that**;
said wire saw apparatus comprises:
a translation means which, in response to said data, operates to cause synchronized translation of both said pattern (P) and said table (40) or said object (W) in a predetermined direction to and from said wire saw (12);
a rotation means which, in response to said data, operates to cause synchronized rotation of both said pattern (P) and said table (40) or said object (W) in a predetermined direction;
a position sensor means (104) for detecting a position of said wire saw (12) with respect to a center of rotation of said rotation means; and
a control means (110) for controlling said rotation means in response to data given from said position sensor means (104), such that, based on said data, the control means (110) determines whether said wire saw (12) is positioned in a radially outward region of said object (W) or in a radially inward region of the object (W), and controls said rotation means correspondingly to vary a speed of said synchronized rotation so as to minimize a variation in a speed with which said wire saw (12) cuts through the object (W),
wherein said translation means and said rotation means are controlled on basis of a polar coordinates system to effect said synchronized translation and rotation of both said pattern (P) and said table (40) or said object (W).

2. A wire saw apparatus as defined in claim 1, wherein said table (40) comprises:
a rotatable base table (44) on which said object (W) is to be placed; and
a pressure table (42) for pressingly retaining the object (W) against said rotatable base table (44).

3. A wire saw apparatus as defined in claim 1 or claim 2, wherein said contour tracing means (60) includes a pulley transmission means (80) by which the contour tracing means (60) are so operatively connected with said translation means that an amount at which the contour tracing means (60) is translated by the translation means becomes small in relation to an amount at which said table (40) or said object (W) is translated by the translation means.

4. A wire saw apparatus as defined in any of claims 1 to 3, wherein said translation means comprises:
a stationary table;
a rail means (32) which is provided on said stationary table, extending along one longitudinal direction thereof;
a carriage means (36) on which said contour tracing sensor (68) and table (40) are mounted, said carriage means (36) being movable on and along said rail means (32); and
a drive means (90, 92) for causing translation of said carriage means (36) along said rail means (32).

5. A wire saw apparatus as defined in claim 1, wherein said contour tracing device (60) includes a drive means for causing movement of said pattern mounting table (62) on the basis of a polar coordinate system in response to said data sent from said contour tracing sensor (68);
wherein said pattern mounting table (62) has a rotary shaft,
wherein said table (40) has a rotary shaft and comprises:
a rotatable base table (44) on which said object (W) is to be placed; and
a pressure table (42) for pressingly retaining the object (W) against said rotatable base table (44), wherein said translation means comprises:
a stationary table ;
a rail means (32) which is provided on said stationary table, extending along one longitudinal direction thereof;
a carriage means (36) on which said contour tracing sensor (68) and table (40) are mounted, said carriage means (36) being movable on and along said rail means (32); and
a drive means (90, 92) for causing translation of said carriage means (36) along said rail means (32), wherein said rotation means includes a rotation drive mechanism (82, 84, 85) operatively connected between said rotary shaft of said table (40) and said rotary shaft of said pattern mounting table (62), such that said center of rotation is common to both said rotary shaft of said table (40) and said rotary shaft of said pattern mounting table (62).

## Patentansprüche

1. Drahtsägevorrichtung, welche einen Tisch (40) zum Halten eines Objektes (W) darauf, eine Drahtsäge (12) sowie ein Gerät zum Trassieren von Konturen (60) umfasst, enthaltend:
einen Schabloneneinspanntisch (62), auf welchem eine Schablone (P) einspannbar ist; und
ein Sensormittel zum Trassieren von Konturen (68) zum Trassieren und Erfassen einer Kontur der Schablone (P);
worin das Gerät zum Trassieren von Konturen (60) dazu ausgebildet ist, die Kontur der Schablone (P) mittels des Sensprmittels zum Trassieren von Konturen (68) zu trassieren und erfassen und worin in Antwort auf Daten, die von dem Sensormittel zum Trassieren von Konturen (68) gesendet wurden, die Drahtsäge (12) dazu ausgebildet ist, das Objekt (W) auf dem Tisch (40) entlang einer vorbestimmten der Kontur der Schablone (P) entsprechenden Kontur zu sägen, **dadurch gekennzeichnet, dass** die Drahtsägevorrichtung umfasst:
ein Verschiebungsmittel, welches in Antwort auf die Daten arbeitet, um ein synchronisiertes Verschieben sowohl der Schablone (P) als auch des Tisches (40) oder des Objektes (W) in eine vorbestimmte Richtung zu der Drahtsäge (12) hin und von der Drahtsäge (12) weg zu bewirken;
ein Drehmittel, welches in Antwort auf die Daten arbeitet, um eine synchronisierte Drehung sowohl der Schablone (P) als auch des Tisches (40) oder des Objektes (W) in eine vorbestimmte Richtung zu bewirken; ein Positionssensormittel (104) zum Erfassen einer Position der Drahtsäge (12) in Bezug auf einen Drehmittelpunkt des Drehmittels; und
ein Steuerungsmittel (110) zum Steuern des Drebmittels in Antwort auf Daten, die von dem Positionssensormittel (104) gegeben werden, derart, dass das Steuerungsmittel (110) auf der Grundlage der Daten bestimmt, ob die Drahtsäge (12) in einem radial äußeren Bereich des Objektes (W) oder in einem radial inneren Bereich des Objektes (W) positioniert ist, und das Drehmittel entsprechend steuert, um eine Geschwindigkeit der synchronisierten Drehung so abzuwandeln, dass eine Variation einer Geschwindigkeit, mit welcher die Drahtsäge (12) durch das Objekt (W) schneidet, minimiert wird,
worin das Verschiebungsmittel und das Drehmittel auf der Grundlage eines Polarkoordinatensystems gesteuert werden, um die synchronisierte Verschiebung und Drehung sowohl der Schablone (P) als auch des Tisches (40) oder des Objektes (W) zu bewirken.

2. Drahtsägevorrichtung nach Anspruch 1, worin der Tisch (40) umfasst:
einen drehbaren Sockeltisch (44), auf welchem das Objekt (W) anzuordnen ist; und
einen Drucktisch (42), um das Objekt (W) unter Druck gegen den drehbaren Sockeltisch (44) zu halten.

3. Drahtsägevorrichtung nach Anspruch 1 oder 2, worin das Mittel zum Trassieren von Konturen (60) ein Rollen-Verschiebungsmittel (80) umfasst, durch welches das Mittel zum Trassieren von Konturen (60) wirkungsgemäß mit dem Verschiebungsmittel so verbunden ist, dass ein Betrag, um welchen das Mittel zum Trassieren von Konturen (60) durch das Verschiebungsmittel verschoben wird, klein wird in Bezug auf einen Betrag, um welchen der Tisch (40) oder das Objekt (W) durch das Verschiebungsmittel verschoben wird.

4. Drahtsägevorrichtung nach einem der Ansprüche 1 bis 3, worin das Verschiebungsmittel umfasst:
einen ortsfesten Tisch;
ein Schienenmittel (32), Welches auf dem ortsfesten Tisch vorgesehen ist und sich entlang einer Längsrichtung davon erstreckt;
ein Schlittenmittel (36), auf welchem der Sensor zum Trassieren von Konturen (68) und der Tisch (40) angebracht sind, wobei das Schlittenmittel (36) auf dem Schienenmittel (32) sowie entlang des Schienenmittels (32) beweglich ist; und
ein Antriebsmittel (90, 92), um eine Verschiebung des Schlittenmittels (36) entlang des Schienenmittels (32) zu bewirken.

5. Drahtsägevorrichtung nach Anspruch 1, worin das Gerät zum Trassieren von Konturen (60) ein Antriebsmittel umfasst, um eine Bewegung des Schabloneneinspanntisches (62) auf der Grundlage eines Polarkoordinatensystem in Antwort auf die von dem Sensor zum Trassieren von Konturen (68) gesendeten Daten zu bewirken;
worin der Schabloneneinspanntisch (62) einen Drehzapfen aufweist,
worin der Tisch (40) einen Drehzapfen aufweist und umfasst:
einen drehbaren Sockeltisch (44), auf welchem das Objekt (W) angeordnet werden soll; und
einen Drucktisch (42), um das Objekt (W) unter Druck gegen den drehbaren Sockeltisch (44) zu halten, worin das Verschiebungsmittel umfasst:
einen stationären Tisch;
ein Schienenmittel (32), das auf dem stationären Tisch vorgesehen ist und sich entlang einer Längsrichtung davon erstreckt;
ein Schlittenmittel (36), auf welchem der Sensor zum Trassieren von Konturen (68) und der Tisch (40) angebracht sind, wobei das Schlittenmittel (36) auf dem Schienenmittel (32) sowie entlang des Schienenmittels (32) beweglich ist; und
ein Antriebsmittel (90, 92), um eine Verschiebung des Schlittenmittels (36) entlang des Schienenmittels (32) zu bewirken, worin das Drehmittel einen Antriebsmechanismus zur Drehung (82, 84, 85) umfasst, welcher wirkungsgemäß zwischen dem Drehzapfen des Tisches (40) und dem Drehzapfen des Schabloneneinspanntisches (62) derart verbunden ist, dass der Drehmittelpunkt des Drehzapfens des Tisches (40) und des Drehzapfens des Schabloneneinspanntisches (62) übereinstimmen.

## Revendications

1. Dispositif de scie à fil qui comprend une table (40) destinée à supporter un objet (W), une scie à fil (12) et un dispositif de traçage de contours (60) comprenant :
- une table de montage d'un modèle (62) sur lequel un modèle (P) peut être monté ; et
- un moyen de détection du traçage de contours (68) destiné à tracer et détecter un contour de ce modèle (P) ;
dans lequel le dispositif de traçage de contours (60) fonctionne de façon à tracer et détecter le contour du modèle (P) à l'aide du moyen de détection du traçage de contours (68) et dans lequel, en réponse aux données transmises à partir de ce moyen de détection du traçage de contours (68), la scie à fil (12) fonctionne de façon à scier l'objet (W) sur la table (40) le long d'un contour prédéterminé correspondant au contour du modèle (P),
ce dispositif de scie à fil étant **caractérisé en ce qu'**il comprend :
- un moyen de translation qui, en réponse à ces données, fonctionne de façon à produire la translation synchronisée du modèle (P) et de la table (40) ou de l'objet (W) dans une direction prédéterminée vers la scie à fil (12) et à partir de celle-ci ;
- un moyen de rotation qui, en réponse à ces données, fonctionne de façon à produire la rotation synchronisée du modèle (P) et de la table (40) ou de l'objet (W) dans une direction prédéterminée ;
- un moyen de détection de la position (104) destiné à détecter une position de la scie à fil (12) par rapport à un centre de rotation du moyen de rotation ; et
- un moyen de commande (110) destiné à commander le moyen de rotation en réponse aux données fournies par le moyen de détection de la position (104) de manière à ce que, sur la base de ces données, le moyen de commande (110) détermine si la scie à fil (12) est positionnée dans une région de l'objet (W) radialement vers l'extérieur ou dans une région de l'objet (W) radialement vers l'intérieur, et commande le moyen de rotation en conséquence de façon à faire varier une vitesse de rotation synchronisée afin de minimiser une variation de la vitesse à laquelle la scie à fil (12) coupe à travers l'objet (W),
dans lequel le moyen de translation et le moyen de rotation sont commandés sur la base d'un système de coordonnées polaires afin d'effectuer la translation et la rotation synchronisées du modèle (P) et de la table (40) ou de l'objet (W).

2. Dispositif de scie à fil selon la revendication 1, dans lequel la table (40) comprend :
- une table de base rotative (44) sur laquelle l'objet (W) doit être placé ; et
- une table de pression (42) destinée à retenir l'objet (W) en le pressant contre la table de base rotative (44).

3. Dispositif de scie à fil selon la revendication 1 ou la revendication 2, dans lequel le dispositif de traçage de contours (60) comprend un moyen de transmission par poulie (80) par lequel les moyens de traçage de contours (60) sont connectés de manière opérationnelle avec le moyen de translation de telle façon qu'une distance sur laquelle le moyen de traçage de contours (60) est déplacé par le moyen de translation devient faible par rapport à une distance sur laquelle la table (40) ou l'objet (W) sont déplacés par le moyen de translation.

4. Dispositif de scie à fil selon l'une quelconque des revendications 1 à 3, dans lequel le moyen de translation comprend :
- une table stationnaire ;
- un moyen constitué d'un rail (32) qui est prévu sur la table stationnaire, s'étendant le long d'une direction longitudinale de celle-ci ;
- un moyen constitué d'un chariot (36) sur lequel le détecteur du traçage de contours (68) et la table (40) sont montés, ce moyen constitué d'un chariot (36) étant mobile sur le moyen constitué d'un rail (32) et le long de celui-ci ; et
- un moyen d'entraînement (90, 92) destiné à produire la translation du moyen constitué d'un chariot (36) le long du moyen constitué d'un rail (32).

5. Dispositif de scie à fil selon la revendication 1,
dans lequel le dispositif de traçage de contours (60) comprend un moyen d'entraînement destiné à produire le mouvement de la table de montage d'un modèle (62) sur la base d'un système de coordonnées polaires en réponse aux données transmises par le détecteur du traçage de contours (68) ;
• dans lequel la table de montage d'un modèle (62) possède un arbre rotatif,
• dans lequel la table (40) possède un arbre rotatif et comprend :
- une table de base rotative (44) sur laquelle l'objet (W) doit être placé, et
- une table de pression (42) destinée à retenir l'objet (W) en le pressant contre la table de base rotative (44),
• dans lequel le moyen de translation comprend :
- une table stationnaire ;
- un moyen constitué d'un rail (32) qui est prévu sur la table stationnaire, s'étendant le long d'une direction longitudinale de celle-ci ;
- un moyen constitué d'un chariot (36) sur lequel le détecteur du traçage de contours (68) et la table (40) sont montés, ce moyen constitué d'un chariot (36) étant mobile sur le moyen constitué d'un rail (32) et le long de celui-ci ; et
- un moyen d'entraînement (90, 92) destiné à produire la translation du moyen constitué d'un chariot (36) le long du moyen constitué d'un rail (32),
• dans lequel le moyen de rotation comprend un mécanisme d'entraînement en rotation (82, 84, 85) connecté de manière opérationnelle entre l'arbre rotatif de la table (40) et l'arbre rotatif de la table de montage d'un modèle (62), de telle façon que le centre de rotation est commun à l'arbre rotatif de la table (40) et à l'arbre rotatif de la table de montage d'un modèle (62).
